# EUROPÄISCHE PATENTSCHRIFT

(11) **EP 4 196 699 B1**
(45) Veröffentlichungstag und Bekanntmachung des Hinweises auf die Patenterteilung: **17.07.2024**
(21) Anmeldenummer: 21755994.7
(22) Anmeldetag: 09.08.2021
(51) Int. Cl.: F16H 57/04, F16D 1/08, F16H 57/00

(54) **GETRIEBE**
GEARBOX WITH OIL SUPPLY FOR SPLINE GEARING AND WIND TURBINE COMPRISING SUCH A GEARBOX AND COMPUTER-IMPLEMENTED METHOD FOR SIMULATING SUCH A GEARBOX
TRANSMISSION AVEC ALIMENTATION EN HUILE POUR ENGRENAGE À CANNELURES ET TURBINE ÉOLIENNE ÉOLIENNE AVEC UNE TELLE TRANSMISSION ET MÉTHODE MISE EN OEUVRE PAR ORDINATEUR POUR SIMULER UNE TELLE TRANSMISSION

(30) Priorität: 11.08.2020 EP 20190590
(43) Veröffentlichungstag der Anmeldung: 21.06.2023
(73) Patentinhaber: Flender GmbH, 46395 Bocholt (DE)
(72) Erfinder: DIETZ, Katrin, 45357 Essen (DE); HESSLING, Pascal, 46395 Bocholt (DE); VOSSSCHMIDT, Tim, 45899 Gelsenkirchen (DE)
(74) Vertreter: Michalski Hüttermann & Partner Patentanwälte mbB
(86) Internationale Anmeldenummer: PCT/EP2021/072198
(87) Internationale Veröffentlichungsnummer: WO 2022/034040

(56) Entgegenhaltungen:
- DE-A1- 102010 060 147
- DE-A1- 102011 002 904
- DE-A1- 102013 217 950
- DE-A1- 3 903 253
- DE-T5- 112012 000 277

## Beschreibung

Die Erfindung betrifft ein Getriebe mit einer als Kerbverzahnung ausgebildeten Welle-Nabe-Verbindung, die eine axiale Erstreckung entlang einer Wellenachse aufweist, wobei eine Ölzuleitung der Kerbverzahnung vorgesehen ist, um in der Kerbverzahnung auftretende relative Bewegungen zwischen einer Wellenseite und einer Nabenseite der Welle-Nabe-Verbindung zu schmieren.

Aus der EP 2 199 607 A2 ist bereits ein Getriebe eingangs definierter Art bekannt.

Aus der DE 10 2012 202 454 A1 ist bereits eine Spritzölversorgung für ein Planetengetriebe bekannt.

Die Druckschriften EP 2 597 307 A3 und US 2010/007 151 A2 offenbaren eine Windkraftanlage mit einem Getriebe und ein doppelwandiges Pitchrohr mit einem äußeren und einem inneren Rohr. Der zwischen dem inneren und dem äußeren Rohr gebildete Hohlraum dient dabei der Zuführung von Schmierstoff. Die elektrischen Leitungen verlaufen durch das innere Rohr.

Aus DE 10 2015 217 906 A1 ist ein Planetengetriebe bekannt, bei dem eine Steckverzahnung zwischen einem Planetenträger und einer Sonnenwelle durch den Planetenträger hindurch von radial außen her mit Öl versorgt wird.

Aus DE 10 2015 216 369 A1 ist es bekannt ein Planetengetriebe über eine Zahnkupplung mit einem Generator zu koppeln, wobei die Zahnkupplung über eine radial außerhalb der Zahnkupplung verlaufende und nach radial innen geöffnete Nut von radial außen her mit Öl versorgt wird.

Aus DE 10 2013 217 950 A1 ist ein Planetengetriebe für eine Windkraftanlage bekannt, bei dem eine Steckverzahnung zwischen einem Planetenträger und einer Sonnenwelle über einen von radial außen her gespeisten und axial verlaufenden Kanal, der zwischen dem Planetenträger und der Sonnenwelle ausgebildet ist, mit Öl versorgt wird.

Aus EP 2 280 193 A2 ist ein Planetengetriebe mit einer Zahnkupplung bekannt, die aus einem radial außerhalb zu der Zahnkupplung axial verlaufenden Schmierstoffzuführungskanal über eine Düse mit Schmierstoff versorgt wird.

Die DE 11 2012 000 277 T5, welche Basis für die zweiteilige Form des Anspruchs 1 ist, zeigt ein Getriebe mit eine zentralen Eingangswelle, die in axialer Richtung über eine Hilfswelle verlängert wird, um eine Ölpumpe anzutreiben. Die Hilfswelle ist hohl ausgeführt und durch die Hilfswelle und teilweise die Eingangswelle erfolgt eine Ölzuführung.

Die DE 10 2010 060147 A1 zeigt in einem Getriebe einen doppelwandig ausgeführten Zentralverteiler. Der Zentralverteiler hat einen Ringkanal und eine zentrale Durchführung.

Bei einschlägigen Anlagen - zum Beispiel Planetengetrieben an Windkraftanlagen - ist es stets eine wichtige Vorgabe, den Bauraum des Getriebes verringern. Die Ausführung einer Welle-Nabe-Verbindung als eine Kerbverzahnung ist diesbezüglich häufig eine leistungsfähige Lösung. Diese Verbindung benötigt eine adäquate Schmierung, weil es zwischen den anliegenden Materialien zu Relativbewegungen kommt, die mittel- und langfristig bei unzureichender Schmierung zur Zerstörung der Verbindung führen können. Herkömmlich ist hierfür häufig eine Spritzölversorgung vorgesehen, sodass insbesondere Oberflächenspannungen des Schmierstoffs für eine Kriechströmung durch den Spalt der Kerbverzahnung sorgen. Beobachtungen haben jedoch ergeben, dass durch eine derartige Schmierstoffversorgung häufig keine ausreichende Schmierung hergestellt werden kann. Der Ausdruck "Kerbverzahnung" wird einschlägig auch häufig als "Kurzverzahnung" bezeichnet.

Eine Spritzölversorgung ist zudem raumgreifend, nutzt das zur Verfügung stehende Ölvolumen wenig effizient - so dass ein verhältnismäßig hoher Ölverbrauch entsteht - und bedarf auch weiterer Umstände (keine Verschmutzung, keine sonstigen Störeinflüsse - wie zum Beispiel entgegenstehende Druckdifferenzen) .

Ausgehend von den Problemen und Nachteilen des Standes der Technik hat es sich die Erfindung zur Aufgabe gemacht, ein Getriebe eingangs definierter Art derart weiterzubilden, sodass die erläuterten Probleme und Nachteile vermieden werden.

Zur erfindungsgemäßen Lösung der Aufgabe wird ein Getriebe eingangs definierter Art mit den zusätzlichen Merkmalen des Kennzeichens des unabhängigen Anspruchs 1 vorgeschlagen. Daneben schlägt die Erfindung ein Verfahren zur Simulation und ein entsprechendes Computerprogrammprodukt vor. Die jeweils abhängigen Unteransprüche beinhalten vorteilhafte Weiterbildungen der Erfindung.

Begriffe, wie radial, tangential oder Umfangsrichtung beziehen sich jeweils auf die erste Drehachse - oder, wenn dies entsprechend angegeben ist, auf eine jeweils zweite Drehachse.

Das erfindungsgemäße Getriebe zeichnet sich dadurch aus, dass eine hohe Betriebssicherheit gewährleistet ist, weil die Welle-Nabe-Verbindung in der Ausbildung als eine Kerbverzahnung aufgrund der erfindungsgemäßen Ölversorgung mit einer Ölzuleitung von radial innen her direkt in einen Hohlraum an der Kerbverzahnung für eine sichere Versorgung mit Öl unter dem in dem Hohlraum herrschenden Öldruck sorgt.

Da die Kerbverzahnung der Welle-Nabe-Verbindung nicht von radial außen, sondern von radial innen her mit Öl versorgt werden kann, ist es möglich die Rotation der Welle der Welle-Nabe-Verbindung für die Ölförderung zu funktionalisieren. Das über die Ölzuleitung zum Hohlraum geförderte Öl kann durch die sich drehende Welle geleitet werden und dadurch von der Welle aufgeprägten Fliehkräften ausgesetzt sein. Dadurch ist es möglich, dass das Öl zumindest anteilig fliehkraftgetrieben, vorzugsweise ausschließlich fliehkraftgetrieben, über die Ölzuleitung in den Hohlraum gefördert wird. Dadurch ist es möglich einen in dem Hohlraum vorgesehene Öldruck fliehkraftunterstützt aufzubauen. Der für die Schmierung der Kerbverzahnung der Welle-Nabe-Verbindung geförderte Ölmassenstrom und/oder der Öldruck im Hohlraum kann zumindest anteilig drehzahlabhängig sein. Bei einer hohen Drehzahl, wenn stärkere Relativbewegung in der Welle-Nabe-Verbindung auftreten können, ist die Schmierung automatisch erhöht. Bei einer niedrigen Drehzahl, wenn weniger starke Relativbewegung in der Welle-Nabe-Verbindung auftreten können, ist eine unnötig starke Schmierung vermieden und kann auf das erforderliche Minimus begrenzt sein. Dies ermöglicht ohne zusätzliche Hilfsmittel eine an die aktuellen Betriebsbedingungen optimierte Schmierung der Kerbverzahnung in der Welle-Nabe-Verbindung.

Die Welle-Nabe-Verbindung weist eine Welle und eine über die Kerbverzahnung drehmomentübertragend gekoppelte Nabe auf, wobei die Welle und die Nabe der Welle-Nabe-Verbindung insbesondere in axialer Richtung im Wesentlichen relativ zueinander unbeweglich sind. Beispielsweise ist die Nabe zwischen einem Absatz der Welle und einem, insbesondere als Sicherungsring ausgestalteten, Sicherungselement allenfalls im Rahmen einer Spielpassung in axialer Richtung relativ zur Welle festgelegt. Vorzugsweise ist die axiale Erstreckung der Welle und der Nabe größer als die axiale Erstreckung der Kerbverzahnung. Besonders bevorzugt steht die Nabe in axialer Richtung über die axiale Erstreckung der Kerbverzahnung hinaus ab, wobei der über die Kerbverzahnung überstehende Teil der Nabe die Welle überdeckt. Dadurch ist zwischen der Nabe und der Welle ein axial neben der Kerbverzahnung ausgebildeter Ringspalt vorgesehen, in den die Ölzuleitung von radial innen her einmünden kann. Das von der Ölzuleitung von radial innen her zugeführte Öl kann innerhalb des Ringspalts leicht in axialer Richtung umgelenkt werden kann, um die Kerbverzahnung der Welle-Nabe-Verbindung über die gesamte axiale Erstreckung schmieren zu können. Der Ringspalt kann den mit der Ölzuleitung kommunizierenden Hohlraum ausbilden, wobei insbesondere der Hohlraum in radialer Richtung über die radiale Erstreckung der Kerbverzahnung hinausgeht. Vorzugsweise kann sich der Hohlraum weiter nach radial innen in die Welle hinein erstrecken als ein Fußkreisradius einer von der Welle ausgebildeten Außenverzahnung der Kerbverzahnung.

Insbesondere ist die Ölzuleitung in einer Welle der Welle-Nabe-Verbindung ausgebildet. Die Ölzuleitung, die beispielsweise als mindestens eine radial verlaufende Bohrung in der Welle der Welle-Nabe-Verbindung ausgebildet ist, kann dadurch fliehkraftunterstützt das Öl nach radial außen in den Hohlraum schleudern und einen entsprechenden Öldruck im Hohlraum aufbauen. Zudem kann die Welle der Welle-Nabe-Verbindung in beiden Axialrichtung von der Kerbverzahnung der Welle-Nabe-Verbindung abstehen, beispielsweise um weitere Getriebekomponenten anzutreiben und/oder einfach gelagert zu werden. Beispielsweise kann ein stirnseitiges Wellenende der Welle der Welle-Nabe-Verbindung in einem Pilotlager aufgenommen und gelagert werden, ohne dass eine Ölversorgung der Kerbverzahnung der Welle-Nabe-Verbindung über einen an der Stirnseite der Welle entlangverlaufenden Kanal verlaufen muss.

Es ist vorgesehen, dass die Welle der Welle-Nabe-Verbindung einen mit der Ölzuleitung kommunizierenden und axial verlaufenden Zuführkanal zumindest teilweise begrenzt. Der Zuführkanal kann beispielsweise als Bohrung und/oder Ringspalt ausgebildet sein. Das in dem Zuführkanal zu der Ölzuleitung und schließlich in den Hohlraum und zu der Kerbverzahnung geführte Öl kann von der den Zuführkanal begrenzenden Oberfläche mitgerissen werden, so dass das im Zuführkanal zur Ölzuleitung geleitete Öl unter Fliehkrafteinfluss gesetzt werden kann. Wenn das in dem Zuführkanal befindliche Öl die radial verlaufende Ölzuleitung trifft, kann das Öl aufgrund der angreifenden Fliehkräfte über die Ölzuleitung nach radial außen gefördert, insbesondere nach radial außen geschleudert, werden.

Vorgesehen ist zudem, dass der, insbesondere einen ringförmigen Strömungsquerschnitt ausbildende, Zuführkanal radial innen durch ein mit der Welle der Welle-Nabe-Verbindung mitdrehendes, Pitchrohr begrenzt ist. Die Welle der Welle-Nabe-Verbindung ist als Hohlwelle ausgestaltet, in die das Pitchrohr mit einem Abstand in radial Richtung unter Ausbildung des, insbesondere im Wesentlichen ringförmigen, Zuführkanals eingesteckt ist. Das Pitchrohr ist mit der Welle drehfest verbunden, so dass sowohl die Welle als auch das Pitchrohr Fliehkräfte auf das Öl in dem Zuführkanal aufprägen können. In dieser Variante bildet die Welle der Welle-Nabe-Verbindung mit Hilfe des verbundenen Pitchrohrs ein doppelwandiges Pitchrohr aus.

Eine vorteilhafte Weiterbildung sieht vor, dass der Hohlraum an einem axialen Ende der Kerbverzahnung angeordnet ist. Auf diese Weise wird der von der Kerbverzahnung gebildete mäanderförmige und sich in Umfangsrichtung erstreckende Spalt von dem Öl von einem axialen Ende zu dem anderen axialen Ende durchströmt.

Eine andere bevorzugte Weiterbildung der Erfindung sieht vor, dass der Hohlraum in einem mittleren axialen Bereich der Kerbverzahnung angeordnet ist, so dass sich beidseitig des Hohlraums mindestens 20% der verbleibenden axialen Erstreckung der Kerbverzahnung befinden. Auf diese Weise ist die Effizienz der zugeführten Ölmenge besonders hoch.

Besonders zweckmäßig ist eine Ausbildung der Erfindung, bei der das Getriebe als ein, insbesondere mehrstufiges, Umlaufrädergetriebe ausgebildet ist, wobei das Umlaufrädergetriebe mindestens ein Hohlrad, mindestens zwei Umlaufräder an mindestens einer Stegwelle und mindestens ein Zentralrad an einer Zentralwelle aufweist, wobei die Kerbverzahnung als eine kraftübertragende Verbindung zwischen dem Zentralrad und der Zentralwelle vorgesehen ist. Die als Oberlaufräder bezeichneten Bauteile werden auch häufig als Planetenräder bezeichnet. Das hier als Zentralrad bezeichnete Bauteil wird auch häufig als Sonnenrad bezeichnet. Die Stegwelle wird auch häufig als Planetenträger bezeichnet.

Insbesondere ist vorgesehen, dass das Umlaufrädergetriebe mehrstufig ausgebildet ist, wobei eine erste Umlaufrädergetriebestufe mindestens umfasst: ein erstes Hohlrad, erste Umlaufräder an mindestens einer ersten Stegwelle und ein erstes Zentralrad an einer ersten Zentralwelle, wobei eine zweite Umlaufrädergetriebestufe mindestens umfasst: mindestens ein zweites Hohlrad, zweite Umlaufräder an mindestens einer zweiten Stegwelle und ein zweites Zentralrad an einer zweiten Zentralwelle, wobei das erste Zentralrad mittels der Kerbverzahnung mit der ersten Zentralwelle gekoppelt ist, wobei die erste Zentralwelle und die zweite Stegwelle mindestens drehfest miteinander verbunden sind, wobei mindestens eine Umlaufrädergetriebestufe mit einer Ölzuleitung zu einer Kerbverzahnung nach der Erfindung ausgebildet ist. Die bei Umlaufgetrieben übliche Hohlverzahnung ist hierbei Bestandteil des Stators. Die beiden Umlaufgetriebe sind jeweils in Reihe angeordnet, wobei ausgehend von dem Antrieb (Windflügel der Windkraftanlage) ein Drehmoment in die erste Stegwelle eingeleitet wird, die mittels Umlaufrädern die Leistung auf ein erstes Zentralrad überträgt. Das erste Zentralrad geht in die zweite Stegwelle über, wobei der Übergang von dem ersten Zentralrad auf die zweite Stegwelle als von der der Kerbverzahnung gebildet angesehen werden kann. Dementsprechend kann die zweite Stegwelle im Wesentlichen auch als das erste Zentralrad bezeichnet werden. Eine derartige Mehrstufigkeit kann sich theoretisch nahezu beliebig fortsetzen.

Besonders bevorzugt ist die Ölzuleitung in oder an der Zentralwelle angeordnet. Auf diese Weise kann der Kerbverzahnung ohne weiteren Übergang mit einer Relativdrehzahl das Öl zugeführt werden.

Eine vorteilhafte Weiterbildung sieht vor, dass die Ölzuleitung mittels einer Ölzuführung aus einem Stator des Getriebes mit Öl versorgt wird, wobei die Ölzuführung eine Wellendichtungs-gedichtete Ringkammer zwischen dem Stator und der Welle der Welle-Nabe-Verbindung, insbesondere der Zentralwelle, aufweist. Eine derartige Überbrückung arbeitet zuverlässig und dauerhaft bei einer sich ergebenen Relativdrehzahl in dem Ölstrom.

Unter dem Stator des Getriebes wird ein bewegungsfestes, nicht-drehendes Bauteil verstanden, bei dem es sich beispielsweise um ein Getriebegehäuse oder eine mit dem Getriebegehäuse drehfest direkt oder indirekt verbundene Getriebekomponente handelt.

Eine andere erfindungsgemäße Möglichkeit zur Ölversorgung der Kerbverzahnung sieht vor, dass die Ölzuleitung mittels einer Ölversorgung an einem Stator des Getriebes mit Öl versorgt wird, wobei die Ölversorgung mindestes eine Austrittsöffnung aufweist, die gegenüber von mindestens einer sich in Umfangsrichtung der Kreisbewegung der Zentralwelle sich erstreckenden Eintrittsöffnungen in dem Hohlraum an einem axialen Ende der Kerbverzahnung angeordnet ist, so dass ein Ölstrahl aus der Austrittsöffnung im Betrieb in die mindestens eine Eintrittsöffnungen zumindest in bestimmten Kreisbewegungsabschnitten eintreten kann. Auf diese Weise kann die Versorgung der Kerbverzahnung mit Schmieröl einerseits und die Überbrückung einer Relativdrehzahl mit dem Ölstrom andererseits in einem einzigen Modul integriert werden.

Eine bevorzugte Anwendung der Erfindung liegt in dem Gebiet der Windkraftanlagen. Hierbei ist eine mögliche Weiterbildung der Erfindung ein erfindungsgemäßes Getriebe für eine Windkraftanlage, die Gondel einer Windkraftanlage umfassend ein erfindungsgemäßes Getriebe oder eine Windkraftanlage mit einem erfindungsgemäßen Getriebe. Hierbei bezieht sich das "erfindungsgemäße Getriebe" entweder auf eine Merkmalskombination gemäß dem Hauptanspruch oder auf eine durch die Rückbezüge der Patentansprüche definierte Merkmalskombination. Besonders zweckmäßig ist hierbei ein Flügelrotor der Windkraftanlage mit der ersten Stegwelle des Getriebes kraftübertragend verbunden ist.

Eine vorteilhafte Weiterbildung der Windkraftanlage sieht vor, dass an dem Flügelrotor eine Pitchverstellvorrichtung vorgesehen ist, wobei die Pitchverstellvorrichtung mittels Steuerleitungen angesteuert wird, wobei die Steuerleitungen einen Leitungsverbund bilden mit der Ölzuführung zu der Ölzuleitung. Der Leitungsverbund kann hierbei vorteilhaft als "doppelwandiges Pitchrohr" ausgebildet sein, derart, dass die Steuerleitung für die Pitchverstelleinrichtung (in der Regel elektrische Leitungen) durch das zentrale Rohr hindurch geführt werden und in dem Zwischenbereich zwischen dem äußeren Rohr und dem inneren Rohr eine Ölversorgung vorgesehen ist, die auch in erfindungsgemäßer Weise die Kerbverzahnung mit Öl versorgt.

Die Erfindung bezieht sich auch auf ein computerimplementiertes Verfahren zur Simulation eines Getriebes nach mindestens einer durch die Ansprüche definierte Merkmalskombination und/oder einer Windkraftanlage nach mindestens einer durch die Ansprüche definierte Merkmalskombination. Dementsprechend umfasst die Erfindung einerseits das körperliche Gebilde mit den erfindungsgemäßen Merkmalen und andererseits auch einen digitalen Zwilling, wie er beispielsweise zum Zweck der Simulation der Anordnung bzw. des Betriebes der Anordnung mittels mindestens eines Computers eingesetzt wird. Daneben bezieht sich die Erfindung auch auf ein entsprechendes Computerprogrammprodukt. Das Computerprogrammprodukt kann Programmcodemittel aufweisen, die bei einer Ausführung durch einen Computer das Verfahren ausführen.

Im Folgenden ist die Erfindung anhand eines speziellen Ausführungsbeispiels zur Verdeutlichung näher beschrieben. Es zeigen:
- Figur 1: eine schematische, vereinfachte Darstellung eines Getriebes nach der Erfindung, das als mehrstufiges Planetengetriebe einer Windkraftanlage ausgebildet ist,

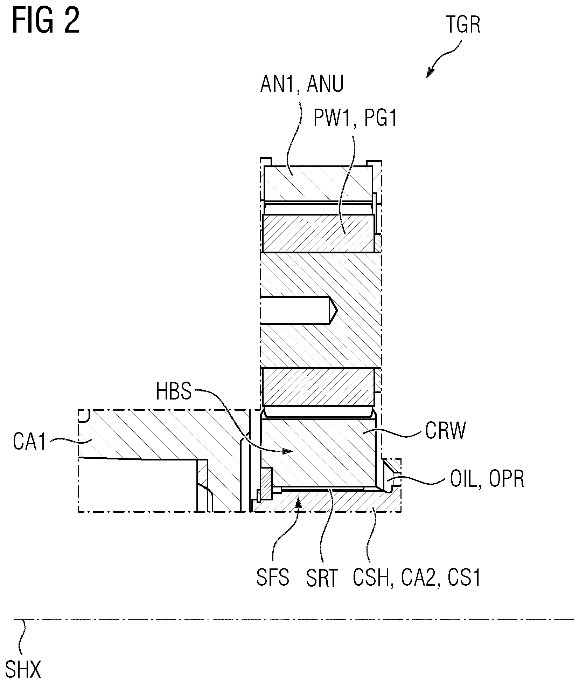

- Figur 2: einen Ausschnitt eines schematischen Längsschnitts durch ein Getriebe, ohne die erfinderischen Merkmale zu zeigen,

- Figur 3: einen etwas anderen Ausschnitt als in Figur 2 umfassend die erfinderischen Details der Ölversorgung für die Kerbverzahnung,
- Figur 4: ein Detail, das in der Figur 3 als IV ausgewiesen ist,
- Figur 5: eine Variante der Ölversorgung für die Kerbverzahnung in schematischer Längsschnittdarstellung,
- Figur 6: ein Detail, das in der Figur 5 als VI ausgewiesen ist,
- Figur 7: eine andere Variante der Ölversorgung für die Kerbverzahnung in schematischer Längsschnittdarstellung,
- Figur 8: eine weitere Variante der Ölversorgung für die Kerbverzahnung in schematischer Längsschnittdarstellung und
- Figur 9: eine weitere Variante der Ölversorgung für die Kerbverzahnung in schematischer Längsschnittdarstellung.

Funktionsgleiche Bauteile sind teilweise mit identischen Bezugszeichen versehen. Funktionsgleiche Bauelemente werden teilweise nicht in allen Figuren ausgewiesen und auch nicht zu jeder einzelnen Abbildung separat wiederholt erläutert. Es ist grundsätzlich davon auszugehen, dass diese Bauelemente in den unterschiedlichen Darstellungen jeweils eine im Wesentlichen gleiche Funktion aufweisen.

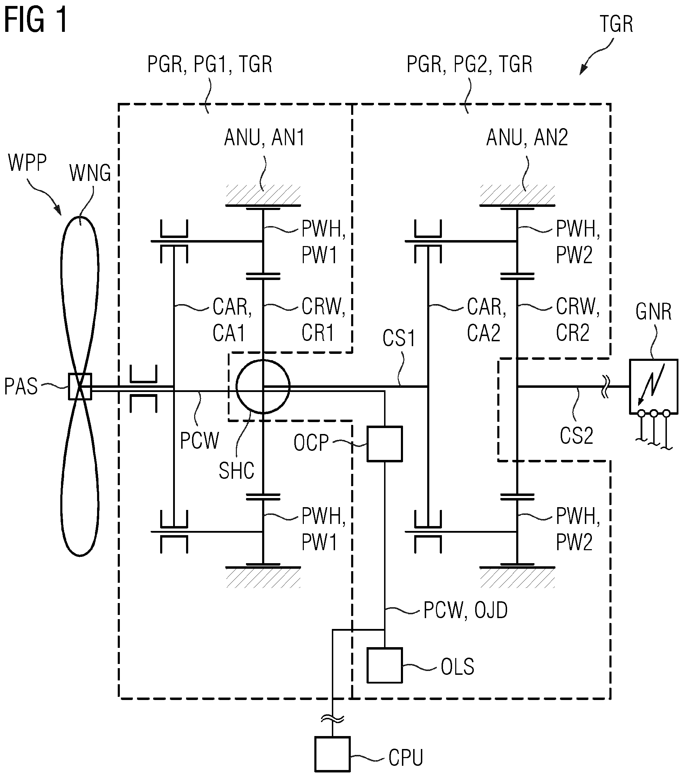

Figur 1 zeigt eine schematische, vereinfachte Darstellung eines Getriebes TGR nach der Erfindung, das als mehrstufiges Planetengetriebe bzw. Umlaufrädergetriebe einer Windkraftanlage WPP ausgebildet ist. Grundsätzlich umfasst das jeweilige Umlaufrädergetriebe PGR mindestens ein Hohlrad ANU, mindestens zwei Umlaufräder PWH an mindestens einer Stegwelle CAR und mindestens ein Zentralrad CRW an einer Zentralwelle CSH, wobei - wie in anderen Figuren dargestellt - eine erfindungsgemäße Kerbverzahnung SRT als eine kraftübertragende Verbindung zwischen dem Zentralrad CRW und der Zentralwelle CSH vorgesehen ist.

Das dargestellte Getriebe TGR ist als Umlaufrädergetriebe PGR mehrstufig ausgebildet. Eine erste Umlaufrädergetriebestufe PG1 umfasst:
ein erstes Hohlrad AN1, erste Umlaufräder PW1 an mindestens einer ersten Stegwelle CA1 und ein erstes Zentralrad CR1 an einer ersten Zentralwelle CS1,
Eine zweite Umlaufrädergetriebestufe PG1 umfasst:
   mindestens ein zweites Hohlrad AN2, zweite Umlaufräder PW2 an mindestens einer zweiten Stegwelle CA2 und ein zweites Zentralrad CR2 an einer zweiten Zentralwelle CS2. Das erste Zentralrad CR1 ist mittels der Kerbverzahnung SRT mit der ersten Zentralwelle CS1 gekoppelt ist, wobei die erste Zentralwelle CS1 und die zweite Stegwelle CA2 mindestens drehfest miteinander verbunden sind. Vorliegend sind die erste Zentralwelle CS1 und die zweite Stegwelle CA2 als ein gemeinsames Bauteil ausgebildet.

Die in Figur 1 dargestellte Windkraftanlage WP P umfasst außerdem einen an der 2. Zentralwelle CS 2 angekoppelte Generator G NR zur Stromerzeugung. Ein Flügelrotor WNG der Windkraftanlage WPP ist mit der ersten Stegwelle CA1 des Getriebes TGR kraftübertragend verbunden. An dem Flügelrotor WNG ist eine Pitchverstellvorrichtung PAS vorgesehen. Die Pitchverstellvorrichtung PAS wird mittels Steuerleitungen PCW angesteuert, wobei die Steuerleitungen PCW einen Leitungsverbund bilden mit der Ölzuführung OCP zu der Ölzuleitung OLS. In nicht dargestellter aber bereits oben erläuterter Weise ist dieser Leitungsverbund als sogenanntes "doppelwandiges Pitchrohr" ausgeführt. Diese Steuerleitungen PCW verbinden die Pitchverstelleinrichtung PAS mit einer zentralen Steuerung CPU.

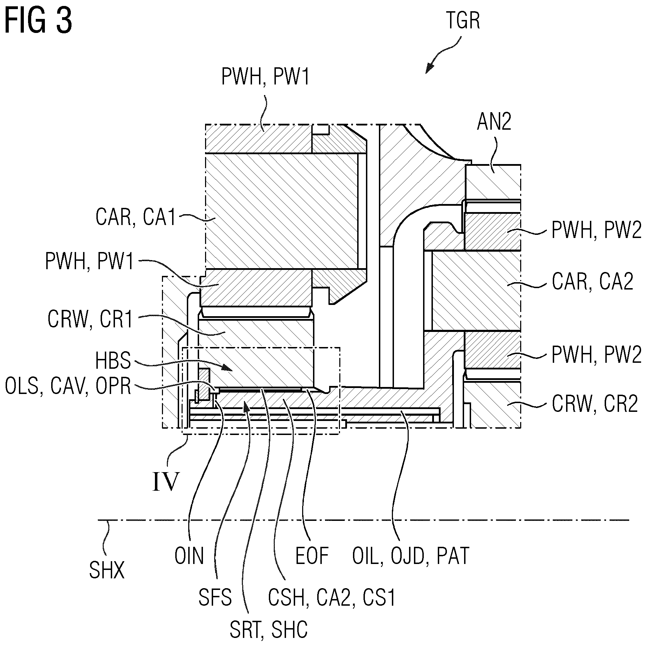

Die Figuren 3-8 zeigen jeweils unterschiedliche schematische Darstellungen von Ausschnitten aus Längsschnitten durch ein als erfindungsgemäßes Getriebe TGR ausgebildetes mehrstufiges Umlaufrädergetriebe PGR. Die Hohlräder ANU, AN1, AN2 bzw. deren zentralen Achsen erstrecken sich hierbei jeweils koaxial zur Wellenachse SHX bzw. zur Drehachse der jeweiligen Zentralwelle CSH, CA1, CA2. Die jeweils drehbaren Bauteile sind in nicht näher erläuterter Weise mittels Wälzlagern oder Gleitlagern zueinander oder zu einem Stator STA drehbar gelagert. Drehachsen von Umlaufrädern PW1, PW2 erstrecken sich jeweils parallel zu der zentralen Drehachse SHX.

Zwischen der Zentralwelle CSH, CS1, CS2 und dem Zentralrad CRW, CW1, CW2 ist eine als Kerbverzahnung SRT ausgebildete Welle-Nabe-Verbindung SHC angeordnet, die eine axiale Erstreckung entlang einer Wellenachse SHX aufweist, wobei eine Ölzuleitung OLS der Kerbverzahnung SRT vorgesehen ist, um in der Kerbverzahnung SRT auftretende relative Bewegungen zwischen einer Wellenseite SFS und einer Nabenseite HBS der Welle-Nabe-Verbindung SHC zu schmieren. Die Ölzuleitung OLS mündet direkt in einen Hohlraum CAV an der Kerbverzahnung SRT ein, sodass die Kerbverzahnung SRT mit dem Öl OIL unter dem in dem Hohlraum CAV herrschenden Öldruck OPR versorgbar ist. Figur 3 zeigt hierbei, wie das doppelwandige Pitchrohr PAT zum Transport des Öls OIL in den als Ölzuleitung OLS ausgebildeten Hohlraum CAV gestaltet ist. Aus dem Hohlraum CAV wird die Kerbverzahnung SRT mit dem Öldruck OPR versorgt.

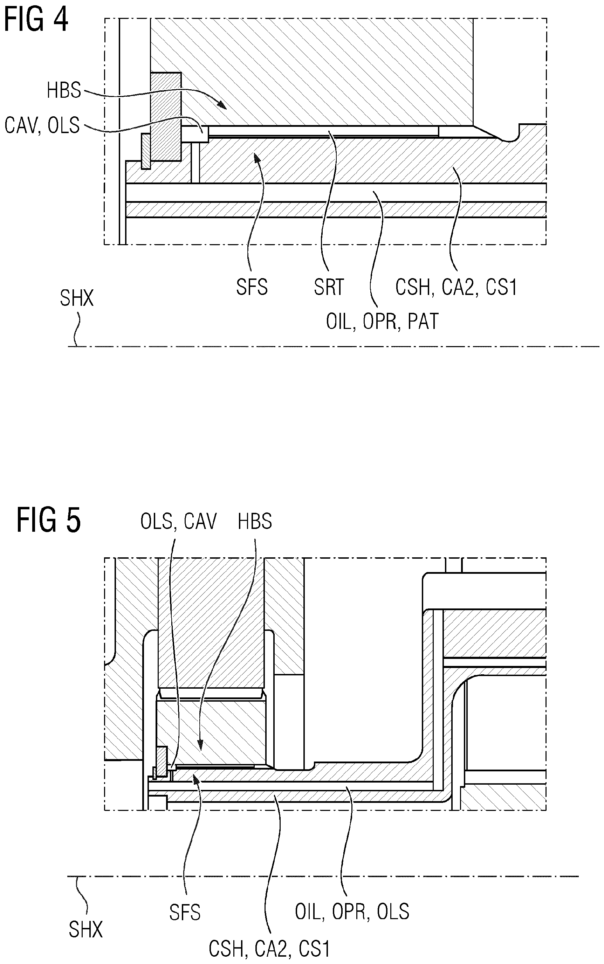

In einer vergrößerten Detaildarstellung zeigt Figur 4, dass der Hohlraum CAV an dem linken axialen Ende der Kerbverzahnung SRT angeordnet ist, sodass das Öl OIL den Spalt der Kerbverzahnung SRT axial von links nach rechts durchströmt. Zwischen der Welle der Welle-Nabe-Verbindung HBS, insbesondere der Zentralwelle CSH, und dem, insbesondere mit der Zentralwelle CSH zur Ausbildung eines doppelwandigen Pitchrohrs verbundenen, Pitchrohr PAT ist ein, vorzugsweise als Ringspalt ausgebildeter, Zuführungskanal ausgebildet, der mit der radial verlaufenden Ölzuleitung OLS kommuniziert.

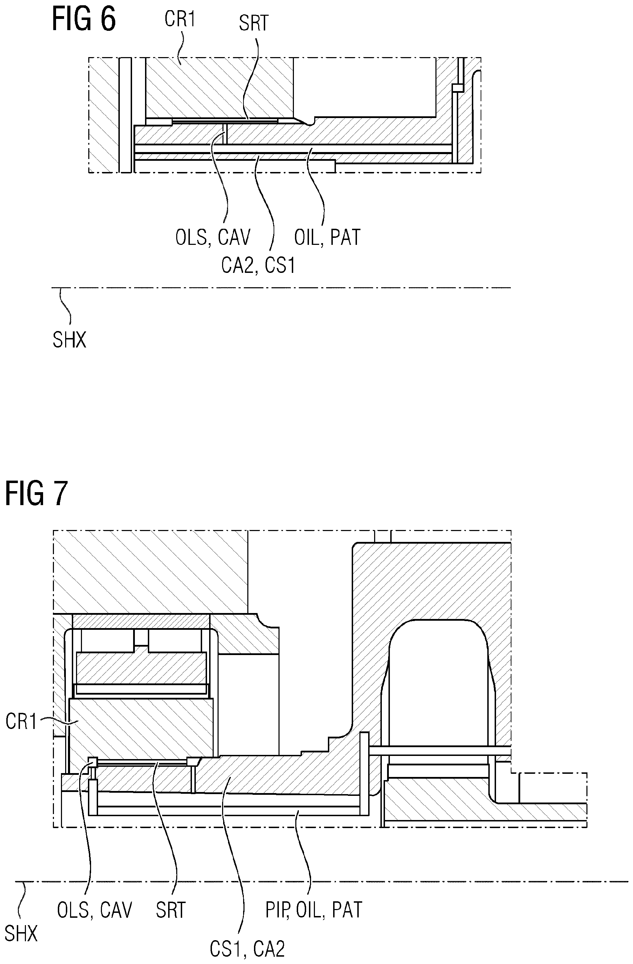

In einer etwas größeren Übersicht zeigt Figur 5 den Weg des Öls OIL durch das doppelwandige Pitchrohr PAT ausgehend von einer Ölzuführung OCP. Die Ölzuführung OCP kann als eine Wellendichtungs-gedichtete Ringkammer (nicht dargestellt) ausgebildet sein, wobei zum Beispiel eine Bronzebuchse eine als Gleitlager arbeitende Dichtung ausbildet und zwischen den beiden relativ rotierenden Bauteilen einen Hohlraum in Ringform definiert. Die Figuren 7, 8, 9 zeigen jeweils Varianten der Ölzuführung OCP.

Figur 6 zeigt ein Detail der Ölzuleitung OLS in den Hohlraum CAV an der Kerbverzahnung SRT der Figur 5 vergrößert. Im Vergleich dazu zeigt Figur 7 eine Variante, bei der der Hohlraum CAV bzw. die Ölzuleitung OLS im mittleren Bereich der Kerbverzahnung SRT zwischen den beiden axialen Enden angeordnet ist.

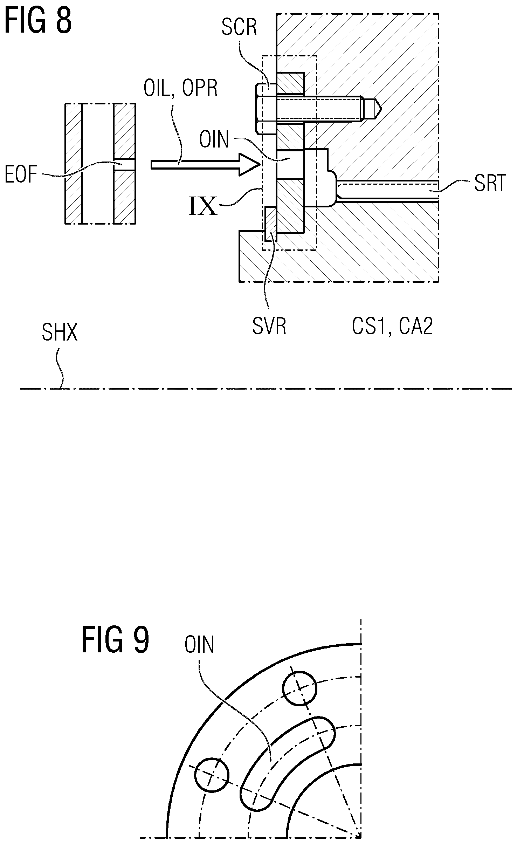

Während die vorhergehenden Varianten der Ölzuleitung OLS eine Zufuhr des Öls OIL als in Bauteile integrierte Kanäle vorsehen, zeigt Figur 8 die Möglichkeit, separate Rohrleitungen PIP an den entsprechenden Bauteilen für das Öl anzubringen.

Die Figur 9 zeigt die Ölzuleitung OLS mittels einer Ölversorgung OJD an einem Stator STT des Getriebes TGR mit Öl OIL versorgt wird, wobei die Ölversorgung OJD eine oder mehrere Austrittsöffnungen EOF aufweist, die gegenüber von mindestens einer sich in Umfangsrichtung der Kreisbewegung der Zentralwelle CSH sich erstreckenden Eintrittsöffnungen OIN in dem Hohlraum CAV an einem axialen Ende der Kerbverzahnung SRT angeordnet ist, so dass ein Ölstrahl aus der Austrittsöffnung EOF im Betrieb in die mindestens eine Eintrittsöffnungen OIN zumindest in bestimmten Kreisbewegungsabschnitten eintreten kann.

## Patentansprüche

1. Getriebe (TGR) mit einer als Kerbverzahnung (SRT) ausgebildeten Welle-Nabe-Verbindung (SHC), die eine axiale Erstreckung entlang einer Wellenachse (SHX) aufweist, wobei eine Ölzuleitung (OLS) der Kerbverzahnung (SRT) vorgesehen ist, um in der Kerbverzahnung (SRT) auftretende relative Bewegungen zwischen einer Wellenseite (SFS) und einer Nabenseite (HBS) der Welle-Nabe-Verbindung (SHC) zu schmieren, wobei die Ölzuleitung (OLS) von radial innen her direkt in einen Hohlraum (CAV) an der Kerbverzahnung (SRT) einmündet, sodass die Kerbverzahnung (SRT) mit dem Öl (OIL) unter dem in dem Hohlraum (CAV) herrschenden Öldruck (OPR) versorgbar ist und
die Welle (CSH, CS1, CS2) der Welle-Nabe-Verbindung (SHC) einen mit der Ölzuleitung (OLS) kommunizierenden und axial verlaufenden Zuführkanal zumindest teilweise begrenzt,
**dadurch gekennzeichnet, dass**
der Zuführkanal radial innen durch ein mit der Welle (CSH, CS1, CS2) mitdrehendes, Pitchrohr (PAT) begrenzt ist und Welle (CSH, CS1, CS2) und Pitchrohr (PAT) ein doppelwandiges Pitchrohr ausbilden.

2. Getriebe (TGR) nach Anspruch 1, wobei die Ölzuleitung (OLS) in einer Welle (CSH, CS1, CS2) der Welle-Nabe-Verbindung (SHC) ausgebildet ist.

3. Getriebe (TGR) nach Anspruch 1 oder 2, wobei der Zuführkanal einen ringförmigen Strömungsquerschnitt ausbildet.

4. Getriebe (TGR) nach einem der Ansprüche 1 bis 4, wobei der Hohlraum (CAV) an einem axialen Ende der Kerbverzahnung (SRT) angeordnet ist.

5. Getriebe (TGR) nach einem der Ansprüche 1 bis 3, wobei der Hohlraum (CAV) in einem mittleren axialen Bereich der Kerbverzahnung (SRT) angeordnet ist, so dass sich beidseitig des Hohlraums (CAV) mindestens 20% der verbleibenden axialen Erstreckung der Kerbverzahnung (SRT) befinden.

6. Getriebe (TGR) nach einem der Ansprüche 1 bis 5, wobei das Getriebe (TGR) als ein mehrstufiges Umlaufrädergetriebe (PGR) ausgebildet ist,
wobei das Umlaufrädergetriebe (PGR) mindestens ein Hohlrad (ANU), mindestens zwei Umlaufräder (PWH) an mindestens einer Stegwelle (CAR) und mindestens ein Zentralrad (CRW) an einer Zentralwelle (CSH) aufweist, wobei die Kerbverzahnung (SRT) als eine kraftübertragende Verbindung zwischen dem Zentralrad (CRW) und der Zentralwelle (CSH) vorgesehen ist.

7. Getriebe (TGR) nach Anspruch 6, wobei die Ölzuleitung (OLS) mittels einer Ölzuführung (OCP) aus einem Stator (STA) des Getriebes (TGR) mit Öl (OIL) versorgt wird, wobei die Ölzuführung (OCP) eine Wellendichtungsgedichtete Ringkammer zwischen dem Stator (STA) und der Welle (CSH, CS1, CS2) der Welle-Nabe-Verbindung (SHC) aufweist.

8. Getriebe (TGR) nach einem der Ansprüche 1 bis 7, wobei die Ölzuleitung (OLS) mittels einer Ölversorgung (OJD) an einem Stator (STA) des Getriebes (TGR) mit Öl (OIL) versorgt wird, wobei die Ölversorgung (OJD) mindestes eine Austrittsöffnung (EOF) aufweist, die gegenüber von mindestens einer sich in Umfangsrichtung der Kreisbewegung der Welle (CSH, CS1, CS2) der Welle-Nabe-Verbindung (SHC) sich erstreckenden Eintrittsöffnungen (OIN) in dem Hohlraum (CAV) an einem axialen Ende der Kerbverzahnung (SRT) angeordnet ist, so dass ein Ölstrahl aus der Austrittsöffnung (EOF) im Betrieb in die mindestens eine Eintrittsöffnungen (OIN) zumindest in bestimmten Kreisbewegungsabschnitten eintreten kann.

9. Windkraftanlage (WPP) mit einem Getriebe (TGR) nach mindestens einem der vorhergehenden Ansprüche.

10. Windkraftanlage (WPP) nach Anspruch 9, wobei ein Flügelrotor (WNG) der Windkraftanlage (WPP) mit einer ersten Stegwelle (CA1) des Getriebes (TGR) kraftübertragend verbunden ist.

11. Windkraftanlage (WPP) nach Anspruch 9 oder 10, wobei an dem Flügelrotor (WNG) eine Pitchverstellvorrichtung (PAS) vorgesehen ist,
wobei die Pitchverstellvorrichtung (PAS) mittels Steuerleitungen (PCW) angesteuert wird,
wobei die Steuerleitungen (PCW) einen Leitungsverbund bilden mit der Ölzuführung (OCP) zu der Ölzuleitung (OLS) .

12. Computerimplementiertes Verfahren zur Simulation (SIM) eines Getriebes (TGR) nach einem der Ansprüche 1 bis 8 und/oder einer Windkraftanlage (WPP) nach einem der Ansprüche 9 bis 11.

13. Computerprogrammprodukt zur Durchführung eines Verfahrens nach Anspruch 12 mittels mindestens eines Computers (CMP).

## Claims

1. Transmission (TGR) having a shaft-hub connection (SHC) which is formed as a serration (SRT) and has an axial extent along a shaft axis (SHX), wherein an oil supply line (OLS) of the serration (SRT) is provided in order to lubricate relative movements occurring in the serration (SRT) between a shaft side (SFS) and a hub side (HBS) of the shaft-hub connection (SHC), wherein the oil supply line (OLS) opens from radially inward directly into a cavity (CAV) on the serration (SRT) such that the serration (SRT) can be supplied with the oil (OIL) at the oil pressure (OPR) prevailing in the cavity (CAV), and
the shaft (CSH, CS1, CS2) of the shaft-hub connection (SHC) at least partially delimits an axially extending supply channel communicating with the oil supply line (OLS),
**characterized in that**
the supply channel is delimited radially inwardly by a pitch tube (PAT) which corotates with the shaft (CSH, CS1, CS2), and the shaft (CSH, CS1, CS2) and pitch tube (PAT) form a double-walled pitch tube.

2. Transmission (TGR) according to Claim 1, wherein the oil supply line (OLS) is formed in a shaft (CSH, CS1, CS2) of the shaft-hub connection (SHC).

3. Transmission (TGR) according to Claim 1 or 2, wherein the supply channel forms an annular flow cross section.

4. Transmission (TGR) according to one of Claims 1 to 4, wherein the cavity (CAV) is arranged at an axial end of the serration (SRT).

5. Transmission (TGR) according to one of Claims 1 to 3, wherein the cavity (CAV) is arranged in a central axial region of the serration (SRT) such that at least 20% of the remaining axial extent of the serration (SRT) is situated on both sides of the cavity (CAV).

6. Transmission (TGR) according to one of Claims 1 to 5, wherein the transmission (TGR) is formed as a multistage planetary gear mechanism (PGR), wherein the planetary gear mechanism (PGR) has at least one annulus (ANU), at least two planetary gears (PWH) on at least one web shaft (CAR) and at least one central gear (CRW) on a central shaft (CSH), wherein the serration (SRT) is provided as a force-transmitting connection between the central gear (CRW) and the central shaft (CSH).

7. Transmission (TGR) according to Claim 6, wherein the oil supply line (OLS) is supplied with oil (OIL) by means of an oil supply (OCP) from a stator (STA) of the transmission (TGR), wherein the oil supply (OCP) has a shaft seal-sealed annular chamber between the stator (STA) and the shaft (CSH, CS1, CS2) of the shaft-hub connection (SHC).

8. Transmission (TGR) according to one of Claims 1 to 7, wherein the oil supply line (OLS) is supplied with oil (OIL) by means of an oil supply (OJD) on a stator (STA) of the transmission (TGR), wherein the oil supply (OJD) has at least one outlet opening (EOF) which is arranged opposite at least one inlet opening (OIN), which extends in the circumferential direction of the circular movement of the shaft (CSH, CS1, CS2) of the shaft-hub connection (SHC), in the cavity (CAV) at an axial end of the serration (SRT) such that, during operation, an oil jet from the outlet opening (EOF) can enter the at least one inlet opening (OIN) at least in certain circular movement phases.

9. Wind turbine (WPP) having a transmission (TGR) according to at least one of the preceding claims.

10. Wind turbine (WPP) according to Claim 9, wherein a bladed rotor (WNG) of the wind turbine (WPP) is connected in a force-transmitting manner to a first web shaft (CA1) of the transmission (TGR).

11. Wind turbine (WPP) according to Claim 9 or 10, wherein a pitch adjustment device (PAS) is provided on the bladed rotor (WNG),
wherein the pitch adjustment device (PAS) is controlled by means of control lines (PCW),
wherein the control lines (PCW) form a line connection with the oil supply (OCP) to the oil supply line (OLS).

12. Computer-implemented method for simulating (SIM) a transmission (TGR) according to one of Claims 1 to 8 and/or a wind turbine (WPP) according to one of Claims 9 to 11.

13. Computer program product for carrying out a method according to Claim 12 by means of at least one computer (CMP).

## Revendications

1. Transmission (TGR), comprenant une liaison arbre/moyeu (SHC), réalisée sous forme de cannelure (SRT), qui présente une étendue axiale le long d'un axe d'arbre (SHX), dans laquelle une conduite d'amenée d'huile (OLS) de la cannelure (SRT) est prévue pour lubrifier des mouvements relatifs se produisant dans la cannelure (SRT) entre un côté arbre (SFS) et un côté moyeu (HBS) de la liaison arbre/moyeu (SHC), dans laquelle la conduite d'amenée d'huile (OLS) débouche depuis radialement à l'intérieur directement sur une cavité (CAV) au niveau de la cannelure (SRT) de sorte que la cannelure (SRT) peut être alimentée avec l'huile (OIL) à la pression d'huile (OPR) régnant dans la cavité (CAV), et
l'arbre (CSH, CS1, CS2) de la liaison arbre/moyeu (SHC) délimite au moins partiellement un canal d'alimentation communiquant avec la conduite d'amenée d'huile (OLS) et s'étendant axialement,
**caractérisée en ce que** le canal d'alimentation est délimité radialement à l'intérieur par un tube de traversée (PAT) tournant conjointement avec l'arbre (CSH, CS1, CS2), et l'arbre (CSH, CS1, CS2) et le tube de traversée (PAT) réalisent un tube de traversée à double paroi.

2. Transmission (TGR) selon la revendication 1, dans laquelle la conduite d'amenée d'huile (OLS) est réalisée dans un arbre (CSH, CS1, CS2) de la liaison arbre/moyeu (SHC).

3. Transmission (TGR) selon la revendication 1 ou 2, dans laquelle le canal d'alimentation réalise une section mouillée annulaire.

4. Transmission (TGR) selon l'une quelconque des revendications 1 à 4, dans laquelle la cavité (CAV) est disposée à une extrémité axiale de la cannelure (SRT).

5. Transmission (TGR) selon l'une quelconque des revendications 1 à 3, dans laquelle la cavité (CAV) est disposée dans une zone axiale centrale de la cannelure (SRT) de sorte qu'au moins 20 % du reste de l'étendue axiale de la cannelure (SRT) se trouvent des deux côtés de la cavité (CAV).

6. Transmission (TGR) selon l'une quelconque des revendications 1 à 5, dans laquelle la transmission (TGR) est réalisée en tant que train épicycloïdal à plusieurs étages (PGR),
dans laquelle le train épicycloïdal (PGR) présente au moins une couronne (ANU), au moins deux roues planétaires (PWH) sur au moins un arbre porteur (CAR) et au moins une roue centrale (CRW) sur un arbre central (CSH),
dans laquelle la cannelure (SRT) est prévue sous la forme d'une liaison de transmission de force entre le planétaire (CRW) et l'arbre central (CSH).

7. Transmission (TGR) selon la revendication 6, dans laquelle la conduite d'amenée d'huile (OLS) est alimentée en huile (OIL) au moyen d'une alimentation d'huile (OCP) à partir d'un stator (STA) de la transmission (TGR), dans laquelle l'amenée d'huile (OCP) présente une chambre annulaire, rendue étanche par une garniture étanche d'arbre, entre le stator (STA) et l'arbre (CSH, CS1, CS2) de la liaison arbre/moyeu (SHC).

8. Transmission (TGR) selon l'une quelconque des revendications 1 à 7, dans laquelle la conduite d'amenée d'huile (OLS) est alimentée en huile (OIL) au moyen d'une alimentation d'huile (OJD) au niveau d'un stator (STA) de la transmission (TGR),
dans laquelle l'alimentation d'huile (OJD) présente au moins un orifice de sortie (EOF) qui est disposé à l'opposé d'au moins un orifice d'entrée (OIN) s'étendant dans la direction circonférentielle du mouvement circulaire de l'arbre (CSH, CS1, CS2) de la liaison arbre/moyeu (SHC) dans la cavité (CAV) à une extrémité axiale de la cannelure (SRT), de sorte qu'un jet d'huile provenant de l'orifice de sortie (EOF) peut entrer en cours de fonctionnement dans ledit au moins un orifice d'entrée (OIN) au moins dans certaines sections de mouvement circulaire déterminées.

9. Eolienne (WPP) comprenant une transmission (TGR) selon au moins l'une des revendications précédentes.

10. Eolienne (WPP) selon la revendication 9, dans laquelle un rotor à aubes (WNG) de l'éolienne (WPP) est relié en transmission de force à un premier arbre porteur (CA1) de la transmission (TGR).

11. Eolienne (WPP) selon la revendication 9 ou 10, dans laquelle un dispositif de réglage du pas d'hélice (PAS) est prévu au niveau du rotor à aubes (WNG),
dans laquelle le dispositif de réglage du pas d'hélice (PAS) est piloté au moyen de conduites de commande (PCW),
dans laquelle les conduites de commande (PCW) constituent un ensemble de conduites avec l'alimentation d'huile (OCP) jusqu'à la conduite d'amenée d'huile (OLS).

12. Procédé mis en œuvre par ordinateur pour simuler (SIM) une transmission (TGR) selon l'une quelconque des revendications 1 à 8 et/ou une éolienne (WPP) selon l'une quelconque des revendications 9 à 11.

13. Produit de programme informatique pour exécuter un procédé selon la revendication 12 au moyen d'au moins un ordinateur (CMP).
